Europäisches Patentamt

European Patent Office

Office européen des brevets

(11) Veröffentlichungsnummer : **0 158 768**
**B1**

(12) **EUROPÄISCHE PATENTSCHRIFT**

(45) Veröffentlichungstag der Patentschrift :
**11.11.87**

(21) Anmeldenummer : **85100260.0**

(22) Anmeldetag : **12.01.85**

(51) Int. Cl.⁴ : **G 03 B 23/04,** G 03 B   1/44

(54) Vorrichtung mit zwei Stationen für flache Gegenstände, insbesondere Filmkarten.

(30) Priorität : **08.02.84 DE 3404383**

(43) Veröffentlichungstag der Anmeldung :
**23.10.85 Patentblatt 85/43**

(45) Bekanntmachung des Hinweises auf die Patenterteilung : **11.11.87 Patentblatt 87/46**

(84) Benannte Vertragsstaaten :
**AT BE CH DE FR GB IT LI LU NL SE**

(56) Entgegenhaltungen :
**DE-B- 2 119 598**
**US-A- 4 015 843**
**US-A- 4 188 025**
**IBM TECHNICAL DISCLOSURE BULLETIN, Vol.25,**
**No.3B, August 1982, W.G.JACKSON "Sheet-orienta-**
**tion device" Seite 1374**

(73) Patentinhaber : **MAP Mikrofilm Apparatebau Dr.**
**Poehler GmbH & Co. KG**
**Schulstrasse 2**
**D-6352 Ober-Mörlen (DE)**

(72) Erfinder : **Poehler, Hermann, Dr.**
**Taunusstrasse 11**
**D-6352 Ober-Mörlen (DE)**
Erfinder : **Dziemba, Peter**
**Ahornweg 17**
**D-6350 Bad Nauheim (DE)**

(74) Vertreter : **Schlagwein, Udo, Dipl.-Ing.**
**Anwaltsbüro Ruppert & Schlagwein Bahnhofsallee 11**
**D-6350 Bad Nauheim (DE)**

**Beschreibung**

Die Erfindung bezieht sich auf eine Vorrichtung mit zwei Stationen für flache Gegenstände, beispielsweise Filmkarten, bei der eine Übergabevorrichtung zum Transport der Gegenstände von der einen Station zur anderen vorgesehen ist und beide Stationen je zwei Führungen zum seitlichen Führen der Gegenstände aufweisen und wobei der flache Gegenstand an der zweiten Station in ein enges Fach eingeführt wird.

Bei Vorrichtungen dieser Art kann es sich zum Beispiel um Mikrofilm-Lesegeräte handeln, bei denen die eine Station eine Kassette und die andere eine Filmbühne ist. Die zu lesende Filmkarte wird dabei automatisch aus der Kassette gezogen, zur Filmbühne transportiert und nach Gebrauch ebenso automatisch zurück in das jeweilige Fach der Kassette befördert. Als Beispiel für den Stand der Technik sei auf die DE-OS 32 43 172.4 verwiesen.

Da man die Kassetten möglichst klein ausbilden will, ist man bestrebt, die einzelnen Fächer für die Filmkarten möglichst schmal auszubilden. Werden die Fächer jedoch zu schmal, dann gelangen die einzelnen Filmkarten nicht mehr zuverlässig in die einzelnen Fächer, sondern stoßen an den jeweiligen Kassettentrennwänden oder den benachbarten Stirnseiten der Filmkarten an, wenn diese nicht genau plan sondern beispielsweise gewellt sind.

Manche Filmkarten, vor allem thermisch entwickelte Filme (Vesicularfilme) haben die Neigung, sich beträchtlich zu wellen. Gefördert wird dieses Wellen noch durch die sich öffnende Filmbühne, weil dabei die Filmkarte zunächst an der hochklappenden Glasscheibe der Filmbühne hängenbleibt. Solche Filmkarten stoßen selbst bei relativ breiten Fächern mit ihren gewellten Stirnflächen gegen die Stirnflächen der benachbarten Filmkarten in der Kassette und können infolge dessen nicht in die Kassette eingeschoben werden.

Man könnte natürlich zwischen der Filmbühne und der Kassette einen sich zur Kassette hin verengenden Schacht vorsehen, durch den hindurch die Filmkarten zu transportieren sind. Das hätte jedoch den Nachteil, daß die Filmkarten sehr leicht verkratzen würden.

Die vorstehenden Probleme treten natürlich nicht nur bei Filmkarten auf, sondern immer dann, wenn flache, zum Verformen neigende Gegenständeträger in einen schmalen Schlitz geschoben werden sollen.

Der Erfindung liegt die Aufgabe zugrunde, eine Vorrichtung der eingangs genannten Art zu entwickeln, bei der auch nicht völlig ebene, flache Gegenstände bei engen Toleranzen problemlos von einer Station zur anderen transportierbar sind.

Diese Aufgabe wird erfindungsgemäß dadurch gelöst, daß die Stationen in Bezug auf ihre Führungsrichtung unter Bildung eines stumpfen Winkels so einander gegenüberliegen, daß zwischen ihnen ein sich spitzwinklig erweiternder Spalt vorhanden ist.

Durch diese nicht genau fluchtende Anordnung der beiden Stationen ergibt es sich, daß die Gegenstände zunächst mit einer Ecke von der einen Station in die andere gelangen. Es tritt dann ein Einfädeleffekt ein, durch den auch relativ stark gewellte Gegenstände beispielsweise in enge Fächer einer Kassette einschiebbar sind. Dieser Einfädeleffekt ist mit denkbar geringem Aufwand zu erreichen, da beispielsweise bei einem Mikrofilm-Lesegerät lediglich die Kassette in Bezug auf die Filmbühne schräg angeordnet werden muß.

Der sich durch die Erfindung ergebende, zu einer Seite hin erweiternde Spalt ist sehr vorteilhaft, wenn in ihm Sensoren zur Überwachung des Übergabebereiches angeordnet werden sollen. Man kann dann die Sensoren am freien Ende eines von der breiteren Seite her in den Spalt ragenden Trägers anordnen. Dieser Träger kann entsprechend der zum freien Ende hin abnehmenden Biegebeanspruchung zum freien Ende hin im Querschnitt abnehmen, so daß er optimal dem sich verengenden Spalt angepaßt ist.

Eine vorteilhafte Ausgestaltung der Erfindung besteht darin, daß die Übergabevorrichtung an der engsten Seite des Spaltes vorgesehen ist und zwei zueinander in einem spitzen Winkel stehende, zangenartig gegen den Informationsträger bewegbare Scheiben aufweist.

Durch diese einseitig wirkende Übergabeeinrichtung ergibt es sich, daß die Gegenstände sich während des Transportes zum Ausgleich der Fluchtungsdifferenz beider Stationen verschwenken können.

Günstig ist es auch, wenn jeweils die zwei auf der Seite der Übergabeeinrichtung liegenden Führungen geradlinig sind und die beiden anderen Führungen zum Ausgleich der Fluchtungsdifferenz leicht bauchig sind. Die flachen Informationsträger schwenken dann während ihres Transportes in die richtige Lage und sind in Endstellung seitlich eindeutig festgelegt. Außerdem sind sie durch die geradlinigen Führungen während ihres Transportes gut geführt.

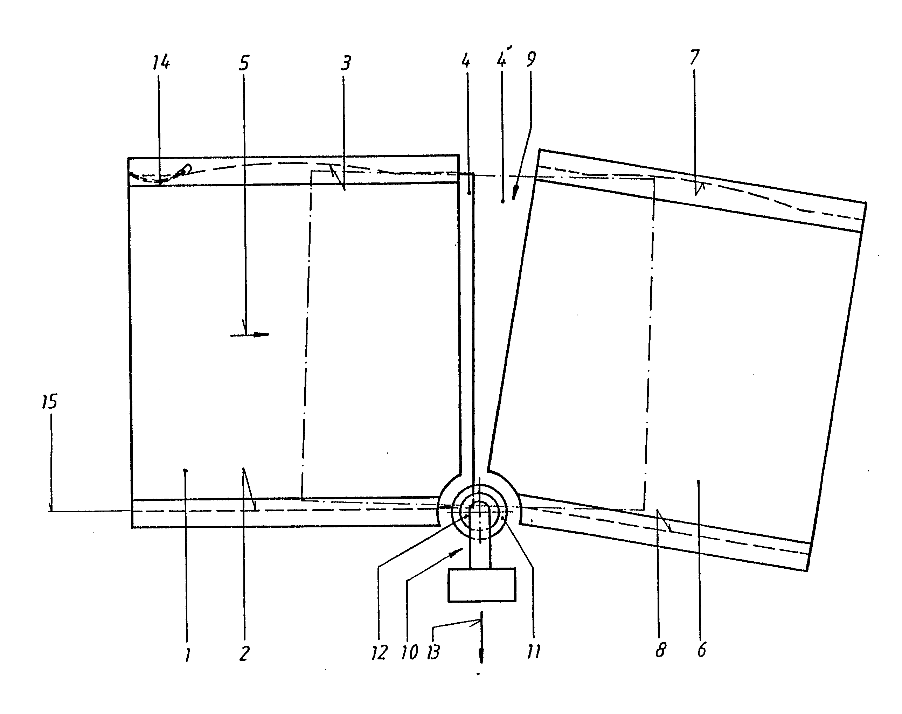

Die Erfindung läßt verschiedene Ausführungsformen zu. Zur Verdeutlichung ihres Grundprinzips ist eine davon in der Zeichnung stark schematisch dargestellt und wird nachfolgend beschrieben. Die Zeichnung zeigt eine Draufsicht auf eine Filmbühne eines Mikrofilm-Lesegerätes und eine vor der Filmbühne angeordnete Filmkartenkassette sowie eine Übergabeeinrichtung.

Die Zeichnung zeigt schematisch im linken Teil eine Filmbühne 1, welche an zwei gegenüberliegenden Seiten jeweils eine Führung 2, 3 hat. Bei der Führung 2 handelt es sich um eine exakte Geradführung, während die Führung 3 nach außen hin leicht bauchig ist. Zwischen den Führungen 2, 3 ist eine Filmkarte 4, auch Mikrofiche genannt, in Richtung des eingetragenen Pfeils 5 verschieblich auf der Filmbühne 1 gehalten. Durch eine nicht dargestellte Andrückfeder wird diese Filmkarte 4 in Anlage an die Führung 2 gehalten. Gestrichelt dargestellt ist eine Filmkarte 4' in einer Zwischenposition zwischen Filmbühne 1 und einer Kassette 6.

Diese Kassette 6 ist neben der Filmbühne 1 angeordnet. In ihr können, ähnlich wie bei einem Diamagazin die Dias, Filmkarten 4 hintereinander in einzelne Fächer eingeschoben werden können. Die Kassette 6 ist quer zur Ebene der Zeichnung höhenverfahrbar, so daß jede beliebige Filmkarte 4 in der Kassette 6 in die Ebene der Filmbühne 1 gebracht werden kann. Genau wie die Filmbühne 1 hat die Kassette 6 Führungen 7, 8, durch die die Filmkarten 4 seitlich geführt und gehalten sind. Bei der Führung 8 handelt es sich um eine exakte Geradführung, während die Führung 7, genau wie die Führung 3, nach außen hin leicht bauchig ist.

Wichtig für die Erfindung ist, daß die Filmbühne 1 und die Kassette 6 nicht genau miteinander fluchten, sondern unter Bildung eines stumpfen Winkels aufeinanderstoßen. Dadurch entsteht zwischen diesen Teilen ein spitzwinkliger Spalt 9.

An der engsten Seite des Spaltes 9 ist zwischen den Führungen 2 und 8 eine Übergabevorrichtung 10 vorgesehen, die zwei in einem spitzen Winkel zueinander stehende Scheiben 11, 12 hat, von denen zumindest eine antreibbar ist. Eine Transporteinrichtung dieser Art ist beispielsweise in der DE-OS 32 39 703.8 beschrieben.

Wenn eine Filmkarte 4 von der Filmbühne 1 zur Kassette 6 transportiert werden soll, dann bewegen sich die beiden Scheiben 11, 12 der übergabevorrichtung 10 zangenartig aufeinander zu, bis daß sie gegen den Randbereich der Filmkarte anliegen und infolge der Drehung der Scheiben die Filmkarte in Richtung der Kassette fördern. Die obere Scheibe 12 der Transporteinrichtung ist so angeordnet, daß auf die Filmkarte stets eine in Richtung auf die Führung 8 wirkende Kraftkomponente wirkt. Die Filmkarte 4 gelangt deshalb beim Transport zur Kassette 6 relativ rasch in Anlage an die Führung 8. Beim Transport von der Kassette 6 zur Filmbühne 1 sind die Verhältnisse umgekehrt. Die Filmkarte 4 wird in Anlage an die Führung 2 gehalten.

## Patentansprüche

1. Vorrichtung mit zwei Stationen (1, 6) für flache Gegenstände, wie beispielsweise Filmkarten (4,4'), bei der eine Übergabevorrichtung (10) zum Transport der Gegenstände von der einen Station zur anderen vorgesehen ist und beide Stationen je zwei Führungen (2, 3 ; 7, 8) zum seitlichen Führen der Gegenstände aufweisen, und wobei der flache Gegenstand an der zweiten Station in ein enges Fach eingeführt wird, dadurch gekennzeichnet, daß die Stationen (beispielsweise Filmbühne 1, Kassette 6) in Bezug auf ihre Führungsrichtung unter Bildung eines stumpfen Winkels so einander gegenüberliegen, daß zwischen ihnen ein sich spitzwinklig erweiternder Spalt (9) vorhanden ist.

2. Vorrichtung nach Anspruch 1 oder einem der folgenden, dadurch gekennzeichnet, daß die Übergabevorrichtung (10) an der engsten Seite des Spaltes (9) vorgesehen ist und zwei zueinander in einem spitzen Winkel stehende, zangenartig gegen die Gegenstände (Filmkarten 4) bewegbare Scheiben (11, 12) aufweist.

3. Vorrichtung nach Anspruch 1 oder einem der folgenden, dadurch gekennzeichnet, daß jeweils die zwei auf der Seite der Übergabevorrichtung (10) liegenden Führungen (2, 8) geradlinig sind und die beiden anderen Führungen (3, 7) zum Ausgleich der Fluchtungsdifferenz leicht bauchig sind.

## Claims

1. Device provided with two stations (1, 6) for flat objects, especially film cards (4, 4'), provided with a transport mechanism (10) for transporting the objects from one station to the other, with both stations having two guides (2, 3 ; 7, 8) each for the lateral guidance of the objects and in which the flat object is being inserted at the second station into a narrow compartment, characterized in that the stations (f. i. film card holder 1, film card magazine 6) are disposed opposite each other by forming an obtuse angle in relation to their guiding direction in such a way that a gap (9) widening at an acute angle is provided between them.

2. Device according to claim 1 or one of the following, characterized in that the transport mechanism (10) is disposed at the narrowest side of the gap (9) and comprises two discs (11, 12) facing each other at an acute angle and being movable like a pincer towards the objects (film cards 4).

3. Device according to claim 1 or one of the following, characterized in that the two guides (2, 8) at the side of the transport mechanism (10) are straight and the other two guides (3, 7) are slightly bulbous in order to compensate for the difference in alignment.

## Revendications

1. Dispositif à deux stations (1, 6) pour articles plans, tels que par exemple plaques de film (4, 4'), dans lequel est prévu un dispositif de transfert (10) pour le transport des articles d'une station à l'autre et dans lequel les deux stations présentent chacune deux glissières (2, 3, 7, 8) pour le guidage latéral des articles, et dans lequel l'article plan est introduit dans la seconde station dans un compartiment étroit, caractérisé en ce que les stations [par exemple plaque de film (1), cassette (6)] sont disposées par rapport à leur direction de guidage selon un angle obtus l'une par rapport à l'autre, de manière telle que entre elles soit présente une fente (9) s'étendant selon un angle aigu.

2. Dispositif selon la revendication 1 ou l'une des suivantes, caractérisé en ce que le dispositif de transfert (10) est disposé du côté le plus étroit de la fente (9) et qu'il comporte deux disques (11, 12) disposés à angle droit l'un par rapport à l'autre et mobiles en pincement à l'égard des objets [plaques de film (4)].

3. Dispositif selon la revendication 1 ou l'une des suivantes, caractérisé en ce que chacune des deux glissières (2, 8) se trouvant du côté du dispositif de transfert (10) sont rectilignes et que les deux autres glissières (3, 7) sont légèrement bombées pour compenser la différence d'alignement.

0 158 768